# FASCICULE DE BREVET EUROPEEN

(11) **EP 4 471 913 B1**
(45) Date de publication et mention de la délivrance du brevet: **16.07.2025**
(21) Numéro de dépôt: 24175692.3
(22) Date de dépôt: 14.05.2024
(51) Int. Cl.: H01M 8/04029, H01M 8/04007, H01M 8/04082, H01M 8/0432, H01M 8/04701, H01M 8/04746, B64D 41/00

(54) **SYSTEME DE REFROIDISSEMENT POUR AERONEF**
KÜHLSYSTEM FÜR EIN FLUGZEUG
COOLING SYSTEM FOR AN AIRCRAFT

(30) Priorité: 30.05.2023 FR 2305355
(43) Date de publication de la demande: 04.12.2024
(73) Titulaire: Airbus (S.A.S.), 31700 Blagnac (FR); AIRBUS OPERATIONS (S.A.S.), 31060 Toulouse (FR)
(72) Inventeur: PAGET, Darren, 31060 TOULOUSE (FR); MARTIN, Charles-Etienne, 31060 TOULOUSE (FR); BERG, Frederick, 85521 OTTOBRUNN (DE)
(74) Mandataire: Airbus-OPS SAS

(56) Documents cités:
- CN-A- 113 611 894
- JP-A- 2022 120 893
- US-A1- 2017 365 901

## Description

### DOMAINE TECHNIQUE

La présente invention concerne un système de refroidissement pour piles à combustible (« fuel cells » en anglais) et équipements électroniques de puissance d'un aéronef.

### ETAT DE LA TECHNIQUE ANTERIEURE

Un système de piles à combustible permet de générer de l'électricité tout en n'émettant aucun rejet nocif pour l'environnement. Un tel système de piles peut alimenter en électricité de multiples équipements à bord d'un aéronef, comme par exemple un système d'éclairage, un système de ventilation, ou un système de propulsion de l'aéronef.

Il est ainsi connu d'équiper un aéronef d'un système de propulsion comportant au moins une pile à combustible servant à alimenter un moteur électrique et une hélice. Un tel système de propulsion comprend généralement une pluralité de piles à combustible.

Un système de refroidissement (« cooling » en anglais) liquide est utilisé afin de réguler la température des piles à combustible. Le système de refroidissement comporte typiquement un évaporateur. En effet, pour le fonctionnement de ladite au moins une pile à combustible afin de produire de l'énergie, l'hydrogène (dihydrogène, H2) est fourni sous forme gazeuse, alors qu'il est stocké sous forme liquide dans un réservoir. L'évaporateur est utilisé pour gazéifier l'hydrogène sous forme liquide pour alimenter les piles à combustible. Pour ce faire, l'évaporateur utilise de la chaleur résiduelle du système de refroidissement.

De même, un système de refroidissement liquide est utilisé afin de réguler la température d'équipements électroniques de puissance du système de propulsion, comme par exemple des convertisseurs DC-DC (« direct current » en anglais), des unités de contrôle ou du moteur électrique. L'évaporateur peut alors utiliser de la chaleur résiduelle du système de refroidissement destiné aux équipements électroniques de puissance.

Les publications JP2022120893A, US2017365901A1 et CN113611894A décrivent des systèmes de pile à combustible avec une gestion thermique intégrée d'une pile à combutible, d'une source d'hydrogène et d'équipements électroniques.

Une difficulté à la conception des systèmes de refroidissement liquide est que la chaleur ponctionnée par l'évaporateur et la chaleur provenant des équipements électroniques de puissance ne sont pas toujours équilibrées. Ceci conduit à un bilan thermique qui peut basculer entre un besoin de chauffage (à haute puissance) du liquide de refroidissement et de rafraîchissement (à faible puissance) du liquide de refroidissement pour réguler la température des équipements électroniques de puissance.

Il est donc souhaitable de fournir une solution qui permette de réguler la température du liquide de refroidissement pour le fonctionnement des piles à combustible, ainsi que la température du liquide de refroidissement pour le fonctionnement des équipements électroniques de puissance, en ayant un impact limité sur la traînée de l'aéronef.

### EXPOSE DE L'INVENTION

Il est ainsi proposé ici un système de refroidissement destiné à être utilisé dans un aéronef qui comporte au moins une pile à combustible, un évaporateur et des équipements électroniques de puissance, le système de refroidissement comportant un circuit de refroidissement dans lequel circule un liquide de refroidissement, le circuit de refroidissement comportant :
- une première boucle destinée à refroidir ladite au moins une pile à combustible et sur laquelle est présent un échangeur de chaleur à air dynamique, dit primaire, ainsi qu'un premier capteur de température ;
- une seconde boucle destinée à refroidir ledit au moins un équipement électronique de puissance et à fournir de la chaleur à l'évaporateur pour gazéifier du dihydrogène afin d'alimenter ladite au moins une pile à combustible, un second capteur de température étant présent sur la seconde boucle ;
- un contrôleur configuré pour ajuster en ouverture une première vanne en entrée de l'échangeur de chaleur à air dynamique primaire et une deuxième vanne sur une branche de recirculation de la première boucle, de sorte à réguler la température d'un liquide de refroidissement en entrée de ladite au moins une pile à combustible.

Le circuit de refroidissement est tel que la première boucle et la seconde boucle sont interconnectées par une canalisation d'écoulement et par une canalisation de retour, la canalisation d'écoulement démarrant en sortie de l'échangeur de chaleur à air dynamique primaire et étant contrôlée en ouverture par le contrôleur, de sorte à réguler la température du liquide de refroidissement en entrée dudit au moins un équipement électronique de puissance.

Le contrôleur est configuré pour réguler lesdites températures du liquide de refroidissement d'après des mesures de températures réalisées par le premier capteur de température et par le deuxième capteur de température.

Ainsi, grâce à l'interconnexion de la première boucle et de la seconde boucle, ainsi qu'à la configuration du contrôleur, la température du liquide de refroidissement pour le fonctionnement des équipements électroniques de puissance est régulée en ponctionnant du liquide de refroidissement dans la première boucle pour l'injecter dans la seconde boucle, ce qui a un impact limité sur la traînée de l'aéronef.

Selon un mode de réalisation particulier, un autre échangeur de chaleur à air dynamique, dit secondaire, est présent sur la première boucle en parallèle de l'échangeur de chaleur à air dynamique primaire.

Selon un mode de réalisation particulier, la canalisation de retour débouche dans une conduite de régulation connectant à la première boucle un réservoir régulateur adapté pour réguler en pression le liquide de refroidissement en entrée de ladite au moins une pile à combustible.

Selon un mode de réalisation particulier, le contrôleur implémente les modes suivants :
- un mode de réchauffement, dans lequel la température du liquide de refroidissement attendue en sortie de l'échangeur de chaleur à air dynamique primaire est du même ordre de grandeur qu'une première température cible adaptée au fonctionnement de ladite au moins une pile à combustible ; et
- un mode de rafraichissement, dans lequel la température du liquide de refroidissement attendue en sortie de l'échangeur de chaleur à air dynamique primaire est inférieure à une deuxième température cible adaptée au fonctionnement dudit au moins un équipement électronique de puissance, la deuxième température cible étant inférieure à la première température cible.

Selon un mode de réalisation particulier, la première boucle et la seconde boucle sont interconnectées en outre par une canalisation d'écoulement complémentaire démarrant en sortie de ladite au moins une pile à combustible, et contrôlée en ouverture par ledit contrôleur.

Selon un mode de réalisation particulier, la canalisation d'écoulement complémentaire débouche dans la canalisation d'écoulement grâce à une vanne à trois voies contrôlée en ouverture par le contrôleur afin de réguler la température du liquide de refroidissement en entrée dudit au moins un équipement électronique de puissance.

Il est aussi proposé un aéronef comportant au moins une pile à combustible, un évaporateur, d'un évaporateur configuré pour gazéifier du dihydrogène afin d'alimenter ladite au moins une pile à combustible, et des équipements électroniques de puissance, ainsi qu'au moins un système de refroidissement tel que mentionné ci-dessus dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un système de refroidissement, destiné à être utilisé dans un aéronef, selon un premier mode de réalisation ;
[Fig. 1B] illustre schématiquement le système de refroidissement, selon un deuxième mode de réalisation ;
[Fig. 2] illustre schématiquement le système de refroidissement, selon un troisième mode de réalisation ;
[Fig. 3] illustre schématiquement un exemple de plateforme matérielle permettant d'implémenter, sous forme de circuiterie électronique, un contrôleur du système de refroidissement ; et
[Fig. 4] illustre schématiquement un aéronef.

### EXPOSE DETAILLE DE MODES DE REALISATION

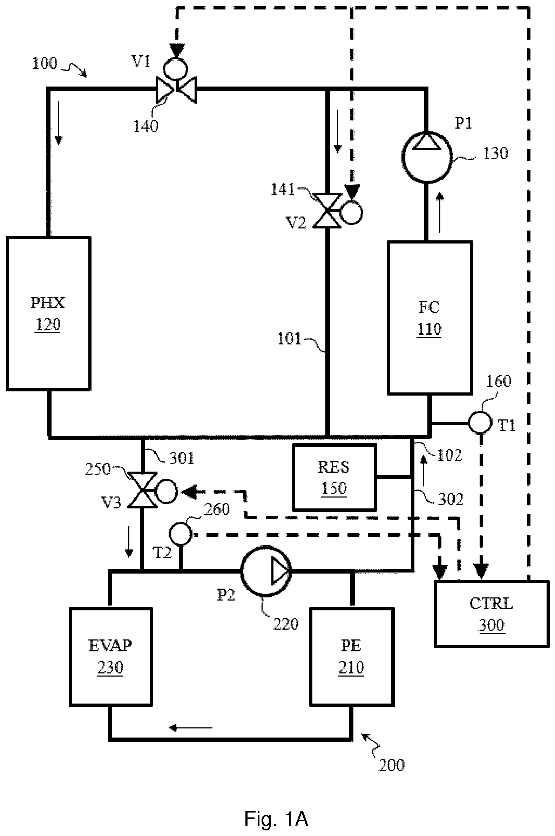

La **Fig. 1A** illustre schématiquement un système de refroidissement, destiné à être utilisé dans un aéronef, selon un premier mode de réalisation. Sur la Fig. 1A, des flèches indiquent le sens de circulation d'un liquide de refroidissement dans un circuit du système de refroidissement.

Le circuit de refroidissement comporte une première boucle 100 destinée au refroidissement d'au moins une pile à combustible FC 110. La première boucle 100 comporte au moins une pompe P1 130 afin d'assurer une circulation du liquide de refroidissement dans la première boucle 100. Dans un mode de réalisation particulier, ladite au moins une pompe P1 130 est présente en aval de ladite au moins une pile à combustible FC 110 comparativement au sens de circulation du liquide de refroidissement dans la première boucle 100. Par exemple, le système de refroidissement comporte une pompe P1 130 par pile à combustible FC 110. Par exemple, ladite au moins une pompe P1 130 assure la circulation de liquide de refroidissement dans la première boucle 100 à un débit massique de 30 kg.s⁻¹.

La première boucle 100 comporte en outre un échangeur de chaleur à air dynamique primaire (« primary ram air heat exchanger » en anglais) PHX 120.

En parallèle de l'échangeur de chaleur à air dynamique primaire PHX 120, la première boucle comprend une branche de recirculation 101, à savoir une canalisation entre la sortie de ladite au moins une pompe P1 130 et l'entrée de ladite au moins une pile à combustible FC 110.

La sortie de ladite au moins une pompe P1 130 est reliée à l'entrée de l'échangeur de chaleur à air dynamique primaire PHX 120 et l'alimentation en liquide de refroidissement de l'échangeur de chaleur à air dynamique primaire PHX 120 est contrôlée en débit par un contrôleur CTRL 300, typiquement grâce à une vanne V1 140.

Le contrôleur CTRL 300 contrôle aussi le débit dans la branche de recirculation 101, typiquement grâce à une autre vanne V2 141.

Les vannes V1 140 et V2 141 sont contrôlées en ouverture par le contrôleur CTRL 300 de sorte à réguler la température du liquide de refroidissement en entrée de ladite au moins une pile à combustible FC 110 à une première température cible TT1. La première température cible TT1 est définie en fonction d'un intervalle de température d'un cahier des charges d'utilisation de ladite au moins une pile à combustible FC 110, typiquement entre 85 et 90°C. Un capteur de température T1 160 est présent sur la première boucle 100 en entrée de ladite au moins une pile à combustible FC 110 pour réaliser des mesures de température du liquide de refroidissement et est connecté au contrôleur CTRL 300 de sorte à fournir au contrôleur CTRL 300 les mesures en question.

La première boucle 100 comporte en outre un réservoir régulateur RES 150, connecté par une conduite de régulation 102, en entrée de ladite au moins une pile à combustible FC 110. Le réservoir régulateur RES 150 permet de compenser des variations de volume de liquide de refroidissement dans le circuit de refroidissement qui sont liées aux variations de température dudit liquide de refroidissement, et le réservoir régulateur RES 150 est agencé pour assurer une pression régulée PREG en entrée de ladite au moins une pile à combustible FC 110. La pression régulée PREG est définie en fonction d'un intervalle de pression du cahier des charges d'utilisation de ladite au moins une pile à combustible FC 110. Par exemple, la conduite de régulation 102 débouche au croisement de la branche de recirculation 101 et d'une voie de retour du liquide de refroidissement en provenance de l'échangeur de chaleur à air dynamique primaire PHX 120, en entrée de ladite au moins une pile à combustible FC 110.

Le circuit de refroidissement comporte une seconde boucle 200 destinée au refroidissement d'au moins un équipement électronique de puissance PE 210.

Par exemple, ladite au moins une pile à combustible FC 110 est configurée pour alimenter en énergie au moins un système de propulsion de l'aéronef, et ledit au moins un équipement électronique de puissance PE 210 est au moins un équipement électronique de puissance dudit au moins un système de propulsion de l'aéronef.

La seconde boucle 200 comporte une pompe P2 220 afin d'assurer la circulation du liquide de refroidissement dans la seconde boucle 200. Par exemple, la pompe P2 220 assure une circulation de liquide de refroidissement dans la seconde boucle 200 à un débit massique de 5 kg.s⁻¹. Le système de refroidissement est tel que la pression en aval de la pompe P2 220 est supérieure à la pression régulée PREG susmentionnée et que la pression en amont de la pompe P2 220 est inférieure à ladite pression régulée PREG. La pompe P2 220 est située en amont dudit au moins un équipement électronique de puissance PE 210.

La seconde boucle 200 comporte en outre un évaporateur EVAP 230. Pour le fonctionnement de ladite au moins une pile à combustible afin de produire de l'énergie, l'hydrogène (dihydrogène, H2) est fourni sous forme gazeuse, alors qu'il est stocké sous forme liquide dans un réservoir. L'évaporateur EVAP 230 est utilisé pour gazéifier l'hydrogène sous forme liquide pour alimenter ladite au moins une pile à combustible FC 110. Pour ce faire, l'évaporateur EVAP 230 utilise de la chaleur résiduelle du système de refroidissement, ici en provenance de la seconde boucle 200. Cela permet d'abaisser la température du liquide de refroidissement dans la seconde boucle 200. Il faut toutefois noter que la quantité de chaleur prélevée par l'évaporateur EVAP 230 dans le liquide de refroidissement de la seconde boucle 200 dépend de la puissance fournie par ladite au moins une pile à combustible FC 110. En effet, la quantité d'hydrogène sous forme gazeuse injectée dans les piles à combustibles est plus élevée dans une phase haute puissance (par exemple, au décollage) que dans une phase basse puissance, ce qui entraîne que la quantité de chaleur prélevée par l'évaporateur EVAP 230 dans le liquide de refroidissement de la seconde boucle 200 est plus importante en phase haute puissance qu'en phase basse puissance. Cela pose une difficulté d'équilibrage de température du liquide de refroidissement dans la seconde boucle 200. De plus, l'équilibrage de température du liquide de refroidissement dans la seconde boucle 200 est rendu aussi difficile du fait que la quantité de chaleur prélevée par l'évaporateur EVAP 230 peut ne pas être suffisante dans la phase basse puissance pour réguler la température du liquide de refroidissement dans la seconde boucle 200 à une deuxième température cible TT2. La deuxième température cible TT2 est définie en fonction d'un intervalle de température d'un cahier des charges d'utilisation des équipements électroniques de puissance PE 210, typiquement environ 60°C, pour optimiser un temps moyen entre défaillances MTBF (« Mean Time Between Failures » en anglais) des équipements électroniques de puissance PE 210. La deuxième température cible TT2 est donc inférieure à la première température cible TT1.

Pour permettre cet équilibrage de température du liquide de refroidissement dans la seconde boucle 200, la première boucle 100 et la seconde boucle 200 sont interconnectées, de sorte à permettre d'utiliser une partie du liquide de refroidissement de la première boucle 100 pour ajuster en température, au besoin, le liquide de refroidissement de la seconde boucle 200.

Ainsi, une canalisation d'écoulement 301 connecte la première boucle 100 à la seconde boucle 200 de sorte à permettre à une partie du liquide de refroidissement de s'écouler depuis la première boucle 100 vers la seconde boucle 200. Fondamentalement, la première boucle 100 et la seconde boucle 200 sont globalement indépendantes, permettant une gestion différente des températures de liquide de refroidissement dans la première boucle 100 et la seconde boucle 200, à savoir une température adaptée au refroidissement de ladite au moins une pile à combustible FC 100 dans la première boucle 100 et une température adaptée au refroidissement des équipements électroniques de puissance PE 210 dans la seconde boucle 200. Cependant, il existe une petite interconnexion entre ces deux boucles qui permet un transfert efficace de liquide de refroidissement conditionné pour ajuster la température du liquide de refroidissement dans la seconde boucle 200.

La canalisation d'écoulement 301 est contrôlée en ouverture par le contrôleur CTRL 300, typiquement grâce à une vanne V3 250. La canalisation d'écoulement 301 démarre en sortie de l'échangeur de chaleur à air dynamique primaire PHX 120. La canalisation d'écoulement 301 débouche dans la seconde boucle 200 en amont de la pompe P2 220 comparativement au sens de circulation du liquide de refroidissement dans la seconde boucle 200, c'est-à-dire à un point bas de pression dans la seconde boucle 200. En ajustant l'écoulement du liquide de refroidissement dans la canalisation d'écoulement 301 par le biais de la vanne V3 250, le contrôleur CTRL 300 équilibre ainsi la température de liquide de refroidissement dans la seconde boucle 200 (refroidissement ou réchauffement) via de petites quantités de liquide de refroidissement prélevées en sortie de l'échangeur de chaleur à air dynamique primaire PHX 120.

La vanne V3 250 est alors contrôlée en ouverture par le contrôleur CTRL 300 de sorte à réguler la température du liquide de refroidissement en entrée dudit au moins un équipement électronique de puissance PE 210 à la deuxième température cible TT2. Un capteur de température T2 260 est présent sur la seconde boucle 200 entre la canalisation d'écoulement 301 et l'entrée dudit au moins un équipement électronique de puissance PE 210 pour réaliser des mesures de température du liquide de refroidissement et est connecté au contrôleur CTRL 300 de sorte à fournir au contrôleur CTRL 300 les mesures en question.

Pour compenser l'apport de liquide de refroidissement via la canalisation d'écoulement 301, une canalisation de retour 302 connecte la seconde boucle 200 à la première boucle 100 de sorte à permettre à une partie du liquide de refroidissement de s'écouler depuis la seconde boucle 200 vers la première boucle 100.

La canalisation de retour 302 démarre de la seconde boucle 200 en aval de la pompe P2 220 comparativement au sens de circulation du liquide de refroidissement dans la seconde boucle 200, c'est-à-dire à un point haut de pression dans la seconde boucle 200. La canalisation de retour 302 débouche dans la première boucle 100 en entrée de la dite au moins une pile à combustible FC 110, c'est-à-dire à un point bas de pression dans la première boucle 100 où la pression est régulée (PREG) par le réservoir régulateur RES 150. Préférentiellement, la canalisation de retour 302 débouche dans la conduite de régulation 102 par laquelle est connecté le réservoir régulateur RES 150.

La pompe P2 220 est agencée de sorte que, en amont de ladite pompe P2 220 (comparativement au sens de circulation du liquide de refroidissement dans la seconde boucle 200), la pression est inférieure à ladite pression régulée PREG et, en aval de ladite pompe P2 220, la pression est supérieure à ladite pression régulée PREG. Cela assure le sens de circulation du liquide de refroidissement entre la première boucle 100 et la seconde boucle 200.

Lorsque le contrôleur CTRL 300 détecte que la température du liquide de refroidissement dans la seconde boucle 200 passe au-dessus de la deuxième température cible TT2 plus une marge supérieure prédéfinie (par exemple de 5°C), le contrôleur CTRL 300 bascule la première boucle 100 dans un mode de rafraichissement du liquide de refroidissement de la seconde boucle 200. Dans le mode de rafraichissement, la température du liquide de refroidissement attendue en sortie de l'échangeur de chaleur à air dynamique primaire PHX 120 est inférieure à la deuxième température cible TT2 (par exemple 50°C). Par exemple, le contrôleur peut pour ce faire réduire l'ouverture de la vanne V1 140. Ainsi, la quantité de liquide de refroidissement à passer par l'échangeur de chaleur à air dynamique primaire PHX 120 est plus faible, ce qui baisse la température du liquide de refroidissement en sortie de l'échangeur de chaleur à air dynamique primaire PHX 120. Le contrôleur CTRL 300 ajuste l'ouverture de la vanne V3 250 de sorte à abaisser la température du liquide de refroidissement dans la seconde boucle 200 à la deuxième température cible TT2 et à la maintenir en dessous de la deuxième température cible TT2 plus ladite marge supérieure prédéfinie. Cela permet de réguler correctement la température du liquide de refroidissement dans la seconde boucle 200 en cas de phase basse puissance.

Lorsque le contrôleur CTRL 300 détecte que la température du liquide de refroidissement dans la seconde boucle 200 passe en dessous de la deuxième température cible TT2 moins une marge inférieure prédéfinie (par exemple de 5°C), le contrôleur CTRL 300 bascule la première boucle 100 dans un mode de réchauffement du liquide de refroidissement de la seconde boucle 200. Dans le mode de réchauffement, la température du liquide de refroidissement attendue en sortie de l'échangeur de chaleur à air dynamique primaire PHX 120 est du même ordre de grandeur que la première température cible TT1. Dans un mode de réalisation particulier, la température du liquide de refroidissement attendue en sortie de l'échangeur de chaleur à air dynamique primaire PHX 120est égale à la première température cible TT1 (par exemple 85°C). Le contrôleur CTRL 300 ajuste l'ouverture de la vanne V3 250 de sorte à augmenter la température du liquide de refroidissement dans la seconde boucle 200 à la deuxième température cible TT2 et à la maintenir au-dessus de la deuxième température cible TT2 moins ladite marge inférieure prédéfinie. Cela permet de réguler correctement la température du liquide de refroidissement dans la seconde boucle 200 en cas de phase haute puissance.

L'application de la marge supérieure prédéfinie et de la marge inférieure prédéfinie permet un phénomène d'hystérésis évitant des basculements intempestifs entre mode de rafraichissement et mode de réchauffement.

Il convient en outre de noter que l'agencement d'interconnexion de la première boucle 100 avec la seconde boucle 200 décrit ci-dessus, ainsi que le contrôle effectué par le contrôleur CTRL 300 permet de réguler la température du liquide de refroidissement dans la seconde boucle 200, et par voie de conséquence l'intégrité opérationnelle des équipements électroniques de puissance PE 210, même en cas de panne de l'évaporateur EVAP 230. Le contrôleur CTRL 300 mettrait alors la première boucle 100 dans le mode de rafraîchissement, et la perte de ponction de chaleur du liquide de refroidissement de la seconde boucle 200 qui serait induite par la panne de l'évaporateur EVAP 230 serait compensée par une ouverture plus grande de la vanne V3 250.

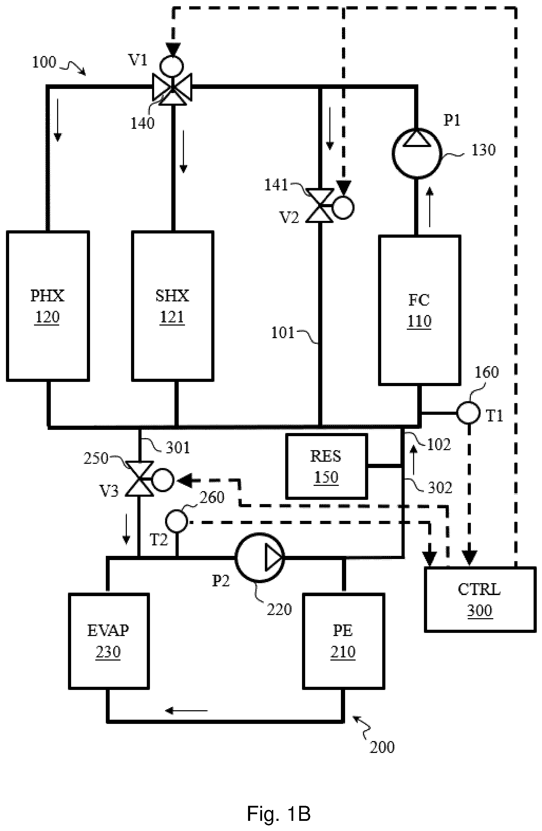

La Fig. 1B illustre schématiquement le système de refroidissement, selon un deuxième mode de réalisation.

Dans ce deuxième mode de réalisation, la première boucle 100 comporte en outre un échangeur de chaleur à air dynamique secondaire (« secondary ram air heat exchanger » en anglais) SHX 121, en parallèle de l'échangeur de chaleur à air dynamique primaire PHX 120. En d'autres termes, l'échangeur de chaleur à air dynamique primaire PHX 120 et l'échangeur de chaleur à air dynamique secondaire SHX 121 sont sur des branches parallèles dans la première boucle 100. La vanne V1 140 est alors une vanne à 3 voies, ayant en entrée, la sortie de ladite au moins une pompe P1 130, et en sorties, l'échangeur de chaleur à air dynamique primaire PHX 120 et l'échangeur de chaleur à air dynamique secondaire SHX 121. Ainsi, la branche de recirculation 101 est alors en parallèle de l'échangeur de chaleur à air dynamique primaire PHX 120 et de l'échangeur de chaleur à air dynamique secondaire SHX 121.

Dans le cadre de la Fig. 1B, la canalisation d'écoulement 301 démarre aussi en sortie de l'échangeur de chaleur à air dynamique primaire PHX 120 (et non en sortie de l'échangeur de chaleur à air dynamique secondaire SHX 121, ni de l'ensemble formé par l'échangeur de chaleur à air dynamique primaire PHX 120 et l'échangeur de chaleur à air dynamique secondaire SHX 121).

L'agencement de la Fig. 1B avec la présence de l'échangeur de chaleur à air dynamique secondaire SHX 121 permet un refroidissement réparti entre l'échangeur de chaleur à air dynamique primaire PHX 120 et l'échangeur de chaleur à air dynamique secondaire SHX 121 pour réguler la température du liquide de refroidissement dans la première boucle 100, et de n'impacter que le fonctionnement de l'échangeur de chaleur à air dynamique primaire PHX 120 en mode de rafraichissement avec une plus faible quantité de liquide de refroidissement injectée alors dans l'échangeur de chaleur à air dynamique primaire PHX 120. La régulation de température dans la première boucle 100 s'en trouve facilitée, avec une réduction de traînée liée au refroidissement par air dynamique grâce à un dimensionnement plus faible de l'échangeur de chaleur à air dynamique primaire PHX 120.

En variante de réalisation, la vanne V1 140 à 3 voies est remplacée par une vanne V1A (non représentée) sur la branche de l'échangeur de chaleur à air dynamique primaire PHX 120 et une autre vanne V1B (non représentée) sur la branche de l'échangeur de chaleur à air dynamique secondaire SHX 121. Les vannes V1A et V1B sont alors contrôlées en ouverture par le contrôleur CTRL 300 pour ajuster la température de liquide de refroidissement en sortie de l'échangeur de chaleur à air dynamique primaire PHX 120 pour les besoins de la seconde boucle 200, ainsi qu'en sortie de l'ensemble formé par l'échangeur de chaleur à air dynamique primaire PHX 120 et l'échangeur de chaleur à air dynamique secondaire SHX 121 pour réguler la température du liquide de refroidissement dans la première boucle 100.

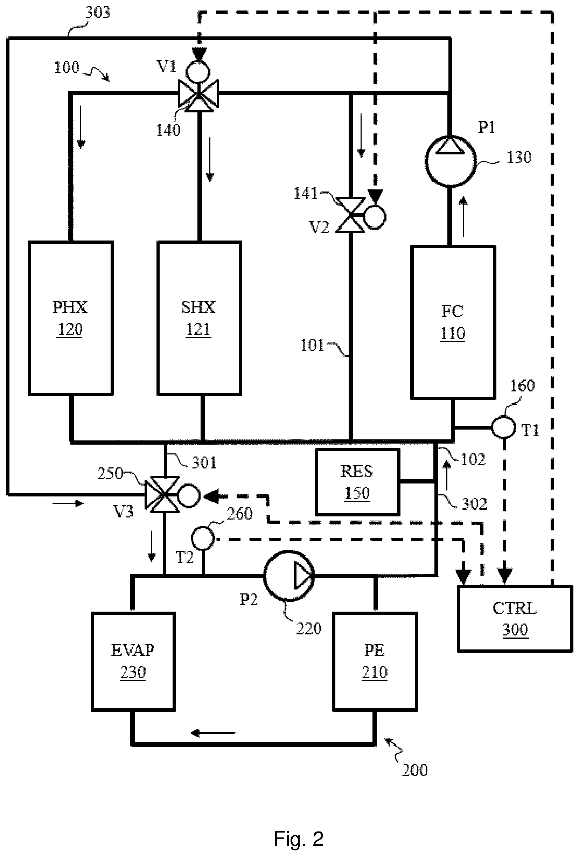

La Fig. 2 illustre schématiquement le système de refroidissement, selon un troisième mode de réalisation. La Fig. 2 présente un aménagement du système de refroidissement représenté sur la Fig. 1B. Le même aménagement peut être réalisé à partir de la Fig. 1A (i.e., sans l'échangeur de chaleur à air dynamique secondaire SHX 121).

Dans le cadre de la Fig. 2, la première boucle 100 et la seconde boucle 200 sont interconnectées en outre par une canalisation d'écoulement complémentaire 303. La canalisation d'écoulement complémentaire 303 démarre en sortie de ladite au moins une pile à combustible FC 110 ou de ladite au moins une pompe P1 130. La canalisation d'écoulement complémentaire 303 débouche dans la canalisation d'écoulement 301. La vanne V3 250 est alors une vanne à 3 voies, ayant en entrées, la sortie de canalisation d'écoulement complémentaire 303 et une partie de la canalisation d'écoulement 301 qui est connectée à la première boucle 100, et en sortie, une partie de la canalisation d'écoulement 301 qui est connectée à la seconde boucle 200.

Cet agencement permet de pourvoir recourir, dans le mode de réchauffement du liquide de refroidissement de la seconde boucle 200, à uniquement faire écouler le liquide de refroidissement de la canalisation d'écoulement complémentaire 303 et de fermer la canalisation d'écoulement 301. Ainsi, la régulation de température de la première boucle 100 peut être indépendante de celle de la seconde boucle 200 et il n'est pas nécessaire de dimensionner l'échangeur de chaleur à air dynamique primaire PHX 120 pour participer, quand nécessaire, au réchauffement du liquide de refroidissement de la seconde boucle 200. La traînée induite s'en trouve améliorée.

En variante de réalisation, la vanne V3 250 à 3 voies est remplacée par une vanne V3A (non représentée) sur la canalisation d'écoulement 301 et une autre vanne V3B (non représentée) sur la canalisation d'écoulement complémentaire 303. Les vannes V3A et V3B sont alors contrôlées en ouverture par le contrôleur CTRL 300 pour ajuster la température de liquide de refroidissement pour les besoins de la seconde boucle 200. La canalisation d'écoulement complémentaire 303 débouche dans la seconde boucle 200 en amont du capteur de température T2 260, comme la canalisation d'écoulement 301, de sorte à ce que le liquide de refroidissement en provenance de ces deux canalisations se mélange avec le liquide de refroidissement déjà présent dans la seconde boucle 200 avant que la température de liquide de refroidissement soit mesurée par le capteur de température T2 260.

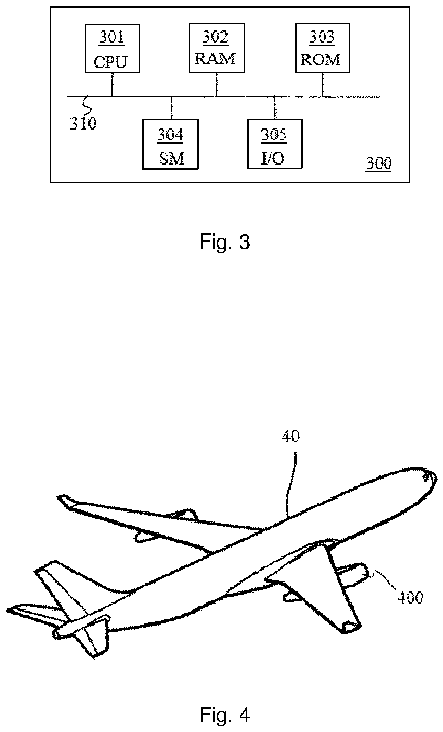

La Fig. 3 illustre schématiquement un exemple de plateforme matérielle permettant d'implémenter, sous forme de circuiterie électronique, le contrôleur CTRL 300.

La plateforme matérielle comporte alors, reliés par un bus de communication 310 : un processeur ou CPU (« Central Processing Unit » en anglais) 301 ; une mémoire vive RAM (« Read-Only Memory » en anglais) 302 ; une mémoire morte 303, par exemple de type ROM (« Read Only Memory » en anglais) ou EEPROM (« Electrically-Erasable Programmable ROM » en anglais) ou de type Flash ; une unité de stockage, telle qu'un support de stockage 304 de type disque dur HDD (« Hard Disk Drive » en anglais), ou un lecteur de support de stockage, tel qu'un lecteur de cartes SD (« Secure Digital » en anglais) ; et un gestionnaire d'interfaces d'entrées/sorties I/O 305.

Le gestionnaire d'entrées/sorties I/O 305 permet au contrôleur CTRL 300 de recevoir des mesures de températures en provenance des capteurs de température T1 160 et T2 260, et éventuellement d'autres capteurs, et de contrôler les vannes V1 140, V2 141 et V3 250 afin de réguler la température de liquide de refroidissement dans la première boucle 100 et dans la seconde boucle 200. Le contrôle en ouverture des vannes V1 140, V2 141 et V3 250 peut être réalisé par le contrôleur CTRL 300 grâce à des règles préétablies et/ou des abaques et/ou des tables de correspondances LUT (« Look-Up Tables » en anglais) stockées en mémoire.

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication (non représenté). Lorsque la plateforme matérielle est mise sous tension, le processeur 301 est capable de lire de la mémoire vive 302 des instructions et de les exécuter. Ces instructions forment un programme d'ordinateur causant l'implémentation, par le processeur 301, de contrôle des vannes V1 140, V2 141 et V3 250, d'après les mesures de température réalisées par les capteurs de température T1 160 et T2 260 afin de réguler la température du liquide de refroidissement dans la première boucle 100 et dans la seconde boucle 200.

Tout ou partie des étapes et fonctionnements permettant le contrôle des vannes V1 140, V2 141 et V3 250 peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le contrôleur CTRL 300 comporte de la circuiterie électronique adaptée et configurée pour implémenter les fonctionnements et étapes permettant le contrôle des vannes V1 140, V2 141 et V3 250.

La **Fig. 4** illustre schématiquement un aéronef 40.

L'aéronef 40 est équipé de ladite au moins une pile à combustible FC 110 et dudit au moins un équipement électronique de puissance PE 210, ainsi que de l'évaporateur EVAP 230. L'aéronef 40 est équipé d'au moins un système de refroidissement tel que décrit ci-dessus dans l'un quelconque de ses modes de réalisation.

Dans un mode de réalisation particulier, l'aéronef 40 est équipé de systèmes de propulsion 400 comportant au moins une pile à combustible servant à alimenter un moteur électrique et une hélice. Chaque système de propulsion est alors muni d'un système de refroidissement tel que décrit ci-dessus dans l'un quelconque de ses modes de réalisation.

## Revendications

1. Système de refroidissement destiné à être utilisé dans un aéronef (40) qui comporte au moins une pile à combustible (110), un évaporateur (230) et au moins un équipement électronique de puissance (210), le système de refroidissement comportant un circuit de refroidissement dans lequel circule un liquide de refroidissement, le circuit de refroidissement comportant :
- une première boucle (100) destinée à refroidir ladite au moins une pile à combustible (110) et sur laquelle est présent un échangeur de chaleur à air dynamique (120), dit primaire, ainsi qu'un premier capteur de température (160) ;
- une seconde boucle (200) destinée à refroidir ledit au moins un équipement électronique de puissance (210) et à fournir de la chaleur à l'évaporateur (230) pour gazéifier du dihydrogène afin d'alimenter ladite au moins une pile à combustible (110), un second capteur de température (260) étant présent sur la seconde boucle (200) ;
- un contrôleur (300) configuré pour ajuster en ouverture une première vanne (140) en entrée de l'échangeur de chaleur à air dynamique primaire (120) et une deuxième vanne (141) sur une branche de recirculation (101) de la première boucle (100), de sorte à réguler la température d'un liquide de refroidissement en entrée de ladite au moins une pile à combustible (110) ;
le circuit de refroidissement étant tel que la première boucle (100) et la seconde boucle (200) sont interconnectées par une canalisation d'écoulement (301) et par une canalisation de retour (302), la canalisation d'écoulement (301) démarrant en sortie de l'échangeur de chaleur à air dynamique primaire (120) et étant contrôlée en ouverture par le contrôleur (300), de sorte à réguler la température du liquide de refroidissement en entrée dudit au moins un équipement électronique de puissance (210),
le contrôleur (300) étant configuré pour réguler lesdites températures du liquide de refroidissement d'après des mesures de températures réalisées par le premier capteur de température (160) et par le deuxième capteur de température (260).

2. Système de refroidissement selon la revendication 1, dans lequel un autre échangeur de chaleur à air dynamique (121), dit secondaire, est présent sur la première boucle (100) en parallèle de l'échangeur de chaleur à air dynamique primaire (120).

3. Système de refroidissement selon l'une des revendications 1 et 2, dans lequel la canalisation de retour (302) débouche dans une conduite de régulation (102) connectant à la première boucle (100) un réservoir régulateur (150) adapté pour réguler en pression le liquide de refroidissement en entrée de ladite au moins une pile à combustible (110).

4. Système de refroidissement selon l'une quelconque des revendications 1 à 3, dans lequel le contrôleur implémente les modes suivants :
- un mode de réchauffement, dans lequel la température du liquide de refroidissement attendue en sortie de l'échangeur de chaleur à air dynamique primaire (120) est du même ordre de grandeur qu'une première température cible adaptée au fonctionnement de ladite au moins une pile à combustible (110) ; et
- un mode de rafraichissement, dans lequel la température du liquide de refroidissement attendue en sortie de l'échangeur de chaleur à air dynamique primaire (120) est inférieure à une deuxième température cible adaptée au fonctionnement dudit au moins un équipement électronique de puissance (210), la deuxième température cible étant inférieure à la première température cible.

5. Système de refroidissement selon l'une quelconque des revendications 1 à 4, dans lequel la première boucle (100) et la seconde boucle (200) sont interconnectées en outre par une canalisation d'écoulement complémentaire (303) démarrant en sortie de ladite au moins une pile à combustible (110), et contrôlée en ouverture par ledit contrôleur (300).

6. Système de refroidissement selon la revendication 5, dans lequel la canalisation d'écoulement complémentaire (303) débouche dans la canalisation d'écoulement (301) grâce à une vanne à trois voies (250) contrôlée en ouverture par le contrôleur (300) afin de réguler la température du liquide de refroidissement en entrée dudit au moins un équipement électronique de puissance (210).

7. Aéronef (40) comportant au moins une pile à combustible (110), un évaporateur (230) configuré pour gazéifier du dihydrogène afin d'alimenter ladite au moins une pile à combustible (110), et au moins un équipement électronique de puissance (210), ainsi qu'au moins un système de refroidissement selon l'une des revendications 1 à 6.

## Patentansprüche

1. Kühlsystem, welches dazu bestimmt ist, in einem Luftfahrzeug (40) verwendet zu werden, das mindestens eine Brennstoffzelle (110), einen Verdampfer (230) und mindestens eine elektronische Leistungseinrichtung (210) umfasst, wobei das Kühlsystem einen Kühlkreislauf umfasst, in dem eine Kühlflüssigkeit zirkuliert, wobei der Kühlkreislauf umfasst:
- eine erste Schleife (100), die dazu bestimmt ist, die mindestens eine Brennstoffzelle (110) zu kühlen, und an der ein dynamischer Luft-Wärmetauscher (120), primärer dynamischer Luft-Wärmetauscher genannt, sowie ein erster Temperatursensor (160) vorhanden sind;
- eine zweite Schleife (200), die dazu bestimmt ist, die mindestens eine elektronische Leistungseinrichtung (210) zu kühlen und dem Verdampfer (230) Wärme zuzuführen, um Diwasserstoff zu vergasen, um die mindestens eine Brennstoffzelle (110) zu speisen, wobei an der zweiten Schleife (200) ein zweiter Temperatursensor (260) vorhanden ist;
- eine Steuereinheit (300), die dafür ausgelegt ist, ein erstes Ventil (140) am Eingang des primären dynamischen Luft-Wärmetauschers (120) und ein zweites Ventil (141) an einem Rücklaufzweig (101) der ersten Schleife (100) hinsichtlich des Öffnens einzustellen, um die Temperatur einer Kühlflüssigkeit am Eingang der mindestens einen Brennstoffzelle (110) zu regeln;
wobei der Kühlkreislauf so beschaffen ist, dass die erste Schleife (100) und die zweite Schleife (200) durch eine Strömungsleitung (301) und durch eine Rücklaufleitung (302) miteinander verbunden sind, wobei die Strömungsleitung (301) am Ausgang des primären dynamischen Luft-Wärmetauschers (120) beginnt und hinsichtlich des Öffnens von der Steuereinheit (300) gesteuert wird, um die Temperatur der Kühlflüssigkeit am Eingang der mindestens einen elektronischen Leistungseinrichtung (210) zu steuern,
wobei die Steuereinheit (300) dafür ausgelegt ist, die Temperaturen der Kühlflüssigkeit anhand von Temperaturmessungen zu regeln, die vom ersten Temperatursensor (160) und vom zweiten Temperatursensor (260) vorgenommen werden.

2. Kühlsystem nach Anspruch 1, wobei ein weiterer dynamischer Luft-Wärmetauscher (121), sekundärer dynamischer Luft-Wärmetauscher genannt, an der ersten Schleife (100) parallel zu dem primären dynamischen Luft-Wärmetauscher (120) vorhanden ist.

3. Kühlsystem nach einem der Ansprüche 1 und 2, wobei die Rücklaufleitung (302) in eine Regelungsleitung (102) mündet, die mit der ersten Schleife (100) einen Regelbehälter (150) verbindet, der dazu eingerichtet ist, die Kühlflüssigkeit am Eingang der mindestens einen Brennstoffzelle (110) hinsichtlich des Drucks zu regeln.

4. Kühlsystem nach einem der Ansprüche 1 bis 3, wobei die Steuereinheit die folgenden Modi implementiert:
- einen Erwärmungsmodus, in dem die Temperatur der Kühlflüssigkeit, die am Ausgang des primären dynamischen Luft-Wärmetauschers (120) erreicht wird, in derselben Größenordnung liegt wie eine erste Zieltemperatur, die an den Betrieb der mindestens einen Brennstoffzelle (110) angepasst ist; und
- einen Kühlmodus, in dem die Temperatur der Kühlflüssigkeit, die am Ausgang des primären dynamischen Luft-Wärmetauschers (120) erreicht wird, niedriger als eine zweite Zieltemperatur ist, die an den Betrieb der mindestens einen elektronischen Leistungseinrichtung (210) angepasst ist, wobei die zweite Zieltemperatur niedriger als die erste Zieltemperatur ist.

5. Kühlsystem nach einem der Ansprüche 1 bis 4, wobei die erste Schleife (100) und die zweite Schleife (200) außerdem durch eine komplementäre Strömungsleitung (303) miteinander verbunden sind, die am Ausgang der mindestens einen Brennstoffzelle (110) beginnt und hinsichtlich des Öffnens von der Steuereinheit (300) gesteuert wird.

6. Kühlsystem nach Anspruch 5, wobei die komplementäre Strömungsleitung (303) in die Strömungsleitung (301) über ein Dreiwegeventil (250) mündet, das hinsichtlich des Öffnens von der Steuereinheit (300) gesteuert wird, um die Temperatur der Kühlflüssigkeit am Eingang der mindestens einen elektronischen Leistungseinrichtung (210) zu regeln.

7. Luftfahrzeug (40), welches mindestens eine Brennstoffzelle (110), einen Verdampfer (230), der dafür ausgelegt ist, Diwasserstoff zu vergasen, um die mindestens eine Brennstoffzelle (110) zu speisen, und mindestens eine elektronische Leistungseinrichtung (210) umfasst, sowie mindestens ein Kühlsystem nach einem der Ansprüche 1 bis 6.

## Claims

1. Cooling system intended to be used in an aircraft (40) which comprises at least one fuel cell (110), an evaporator (230) and at least one power electronic equipment item (210), the cooling system comprising a cooling circuit in which a coolant circulates, the cooling circuit comprising:
- a first loop (100) intended to cool said at least one fuel cell (110) and on which there is a ram air heat exchanger (120), called primary, and a first temperature sensor (160);
- a second loop (200) intended to cool said at least one power electronic equipment item (210) and to supply heat to the evaporator (230) to gasify dihydrogen in order to supply said at least one fuel cell (110), a second temperature sensor (260) being present on the second loop (200);
- a controller (300) configured to adjust the opening of a first valve (140) at the input of the primary ram air heat exchanger (120) and a second valve (141) on a recirculation branch (101) of the first loop (100), so as to regulate the temperature of a coolant at the input of said at least one fuel cell (110);
the cooling circuit being such that the first loop (100) and the second loop (200) are interconnected by a flow line (301) and by a return line (302), the flow line (301) starting at the output of the primary ram air heat exchanger (120) and being controlled in opening by the controller (300), so as to regulate the temperature of the coolant at the input of said at least one power electronic equipment item (210),
the controller (300) being configured to regulate said temperatures of the coolant according to temperature measurements performed by the first temperature sensor (160) and by the second temperature sensor (260).

2. Cooling system according to Claim 1, wherein another ram air heat exchanger (121), called secondary, is present on the first loop (100) in parallel with the primary ram air heat exchanger (120).

3. Cooling system according to one of Claims 1 and 2, wherein the return line (302) emerges in a regulation duct (102) connecting to the first loop (100) a regulator tank (150) adapted to regulate the pressure of the coolant at the input of said at least one fuel cell (110).

4. Cooling system according to any one of Claims 1 to 3, wherein the controller implements the following modes:
- a warming-up mode, in which the temperature of the coolant expected at the output of the primary ram air heat exchanger (120) is of the same order of magnitude as a first target temperature suited to the operation of said at least one fuel cell (110); and
- a cooling mode, in which the temperature of the coolant expected at the output of the primary ram air heat exchanger (120) is less than a second target temperature suited to the operation of said at least one power electronic equipment item (210), the second target temperature being less than the first target temperature.

5. Cooling system according to any one of Claims 1 to 4, wherein the first loop (100) and the second loop (200) are also interconnected by a complementary flow line (303) starting at the output of said at least one fuel cell (110), and controlled in opening by said controller (300).

6. Cooling system according to Claim 5, wherein the complementary flow line (303) emerges in the flow line (301) using a three-way valve (250) that is controlled in opening by the controller (300) in order to regulate the temperature of the coolant at the input of said at least one power electronic equipment item (210).

7. Aircraft (40) comprising at least one fuel cell (110), an evaporator (230) configured to gasify dihydrogen in order to supply said at least one fuel cell (110), and at least one power electronic equipment item (210), as well as at least one cooling system according to one of Claims 1 to 6.
